# EUROPEAN PATENT APPLICATION

(11) **EP 4 016 313 A1**
(43) Date of publication of application: **22.06.2022**
(21) Application number: 21195421.9
(22) Date of filing: 08.09.2021
(51) Int. Cl.: G06F 12/1009

(54) **HIGH CAPACITY HIDDEN MEMORY**

(30) Priority: 21.12.2020 US 202017128804
(71) Applicant: Intel Corporation, Santa Clara, CA 95054 (US)
(72) Inventor: Gomes, Wilfred, Portland, OR 97229 (US); Dixon, Martin, Portland, OR 97219 (US); Sharma, Abhishek Anil, Portland, OR 97229 (US)
(74) Representative: Samson & Partner Patentanwälte mbB

(57) **Abstract**

An embodiment of an apparatus may include a processor, memory communicatively coupled to the processor, and circuitry communicatively coupled to the processor and the memory, the circuitry to manage a portion of the memory as hidden memory outside a range of physical memory accessible by user applications, and control access to the hidden memory from the processor with hidden page tables. Other embodiments are disclosed and claimed.

## Description

### BACKGROUND

### 1. Technical Field

This disclosure generally relates to processor technology and memory technology.

### 2. Background Art

Dynamic random-access memory (DRAM) integrated on the same die or multi-chip module (MCM) of an application-specific integrated circuit (ASIC) or central processor unit (CPU) may be referred to as embedded DRAM (eDRAM). eDRAM's cost-per-bit is generally higher as compared to equivalent standalone DRAM chips used as external memory. But the performance advantages (e.g., wider busses, faster operating speeds, etc.) of integrating DRAM onto the same chip as the processor may outweigh the cost disadvantages in many applications

Standards for a high bandwidth memory (HBM) DRAM interface are published by JEDEC (www.jedec.org). Updates to these standards include HBM2 and HMB2E. HBM technology provides higher bandwidth at lower power consumption as compared to some other memory technologies. HBM technology may include stacks of memory dice and a much wider memory bus as compared to some other memory technologies.

### BRIEF DESCRIPTION OF THE DRAWINGS

The various embodiments of the present invention are illustrated by way of example, and not by way of limitation, in the figures of the accompanying drawings and in which:
FIGs. 1A and 1B are block diagrams of an example of an apparatus according to an embodiment;
FIGs. 2A to 2B are flow diagrams of an example of a method according to an embodiment;
FIG. 3 is a block diagram of an example of an integrated circuit according to an embodiment;
FIG. 4 is a block diagram of an example of a computing system according to an embodiment;
FIGs. 5A to 5B are illustrative diagrams of examples of memory indirection according to an embodiment;
FIGs. 6A to 6B are front view and top view block diagrams, respectively, of an example of an electronic apparatus according to an embodiment;
FIG. 7 is a block diagram of another example of an integrated circuit die according to an embodiment;
FIG. 8 is a block diagram of another example of an integrated circuit die according to an embodiment;
FIG. 9A is an illustrative fragmented, cross-sectional view of an embedded DRAM according to an embodiment;
FIG. 9B is an enlarged view of the dashed box area B in FIG. 9A;
FIG. 10A is a block diagram illustrating both an exemplary in-order pipeline and an exemplary register renaming, out-of-order issue/execution pipeline according to embodiments of the invention.
FIG. 10B is a block diagram illustrating both an exemplary embodiment of an in-order architecture core and an exemplary register renaming, out-of-order issue/execution architecture core to be included in a processor according to embodiments of the invention;
FIGs. 11A-B illustrate a block diagram of a more specific exemplary in-order core architecture, which core would be one of several logic blocks (including other cores of the same type and/or different types) in a chip;
FIG. 12 is a block diagram of a processor that may have more than one core, may have an integrated memory controller, and may have integrated graphics according to embodiments of the invention;
FIGs. 13-16 are block diagrams of exemplary computer architectures; and
FIG. 17 is a block diagram contrasting the use of a software instruction converter to convert binary instructions in a source instruction set to binary instructions in a target instruction set according to embodiments of the invention.

### DETAILED DESCRIPTION

Embodiments discussed herein variously provide techniques and mechanisms for high capacity hidden memory. The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultramobile personal computers, wired telephones, combinations thereof, and the like. More generally, the technologies described herein may be employed in any of a variety of electronic devices including integrated circuitry which is operable to provide or utilize a high capacity hidden memory.

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of' or "one or more of' can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Various embodiments described herein may include a memory component and/or an interface to a memory component. Such memory components may include volatile and/or nonvolatile (NV) memory. Volatile memory may be a storage medium that requires power to maintain the state of data stored by the medium. Non-limiting examples of volatile memory may include various types of random access memory (RAM), such as dynamic RAM (DRAM) or static RAM (SRAM). One particular type of DRAM that may be used in a memory module is synchronous dynamic RAM (SDRAM). In particular embodiments, DRAM of a memory component may comply with a standard promulgated by Joint Electron Device Engineering Council (JEDEC), such as JESD79F for double data rate (DDR) SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at jedec.org). Such standards (and similar standards) may be referred to as DDR-based standards and communication interfaces of the storage devices that implement such standards may be referred to as DDR-based interfaces.

NV memory (NVM) may be a storage medium that does not require power to maintain the state of data stored by the medium. In one embodiment, the memory device may include a block addressable memory device, such as those based on NAND or NOR technologies. A memory device may also include future generation nonvolatile devices, such as a three dimensional (3D) crosspoint memory device, or other byte addressable write-in-place nonvolatile memory devices. In one embodiment, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor RAM (FeTRAM), anti-ferroelectric memory, magnetoresistive RAM (MRAM) memory that incorporates memristor technology, resistive memory including the metal oxide base, the oxygen vacancy base and the conductive bridge RAM (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product. In particular embodiments, a memory component with non-volatile memory may comply with one or more standards promulgated by the JEDEC, such as JESD218, JESD219, JESD220-1, JESD223B, JESD223-1, or other suitable standard (the JEDEC standards cited herein are available at jedec.org).

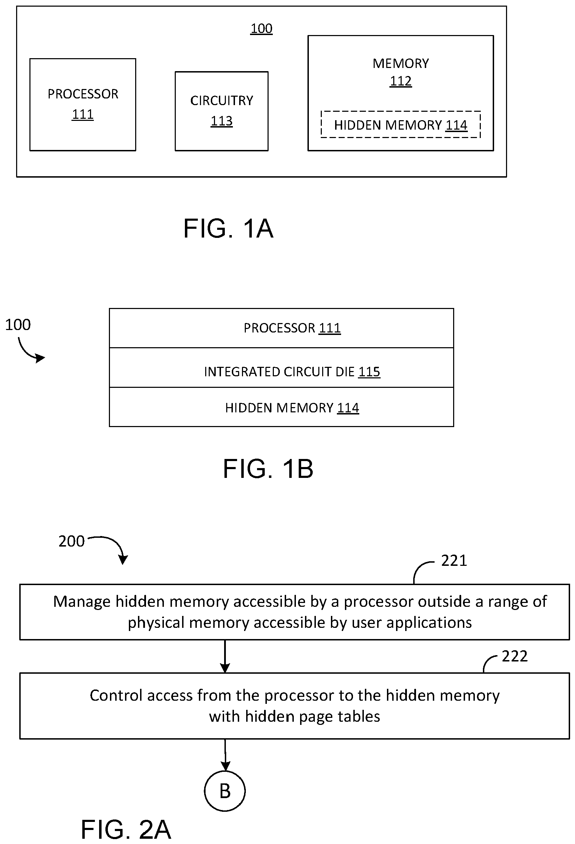

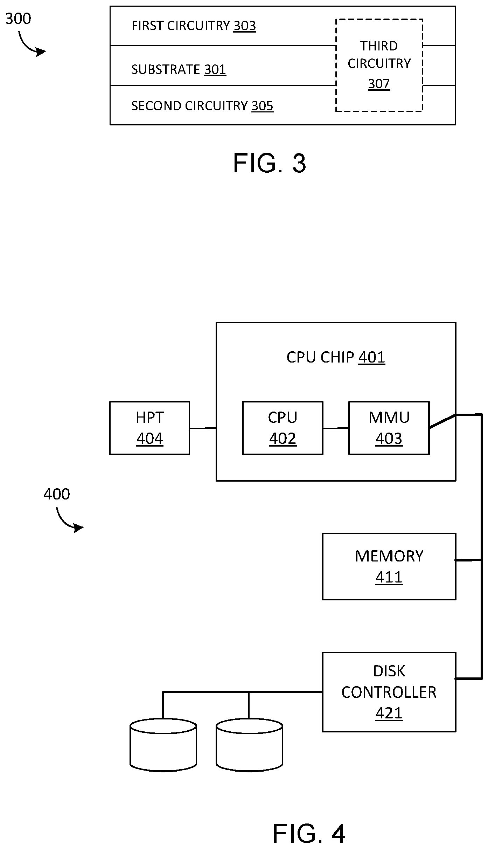

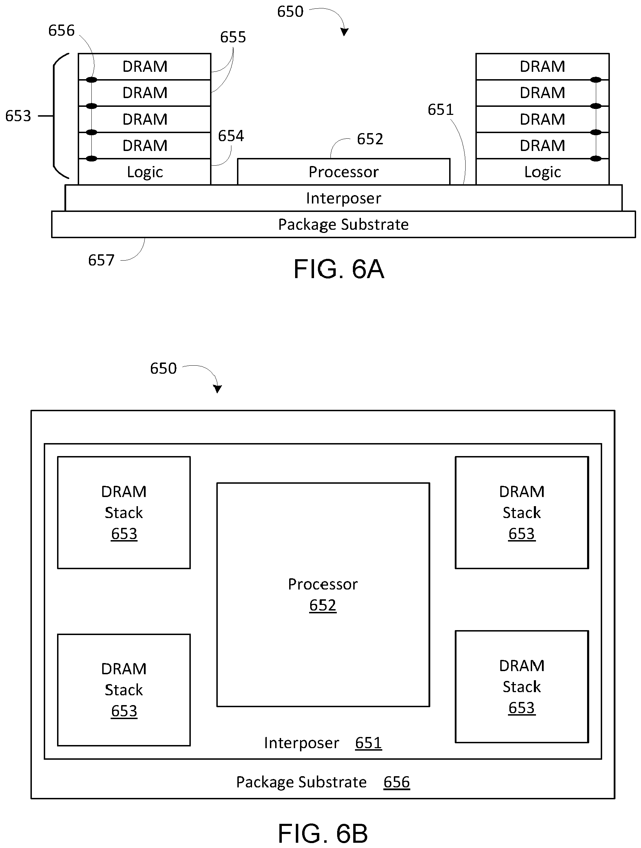

With reference to FIGs. 1A and 1B, an embodiment of an apparatus 100 may include a processor 111, memory 112 communicatively coupled to the processor 11, and circuitry 113 communicatively coupled to the processor 111 and the memory 112. The circuitry 113 may be configured to manage a portion of the memory 112 as hidden memory 114 outside a range of physical memory accessible by user applications, and control access to the hidden memory 114 from the processor 111 with hidden page tables. Accordingly, the hidden memory 114 is accessible only by the processor 111 and is not accessible by user applications. For example, the hidden memory 114 may have a capacity of at least 128 megabytes, or even 1 gigabyte or several gigabytes or more (e.g., the capacity of the hidden memory 114 available to the processor may be much larger than a capacity of other typical on-die memory such as registers, buffers, etc.). In some embodiments, the processor 111, the hidden memory 114, and the circuitry 113 may be disposed on a same integrated circuit die 115 (e.g., see FIGs. 1B, 3, 6A-B, 7, and 8). As illustrated in FIG. 1B, the processor 111 may be disposed on a first surface of the die 115 and the hidden memory 114 may be disposed on a second surface of the die 115 opposite to the first surface (e.g., see also FIGs. 3, 7, and 8). In some embodiments, the processor 111, the memory 112, and the circuitry 113 may be disposed in a same integrated circuit package (e.g., SoC package, multi-chip package, flip-chip package, etc.). For example, the memory 112 may comprise 3D stacked DRAM (e.g., see FIGs. 6A-B).

In some embodiments of the apparatus 100, a page length for the hidden page tables may be longer than a page length for non-hidden memory page tables. Additionally, or alternatively, the hidden page tables may include private key information on a per-page basis. In some embodiments, the circuitry 113 may be further configured to store virtualization information in the hidden memory 114, to store error correction codes for non-hidden memory in the hidden memory, and/or to store an integrity table in the hidden memory 114 and determine if contents of non-hidden memory are untampered based on the integrity table stored in the hidden memory 114.

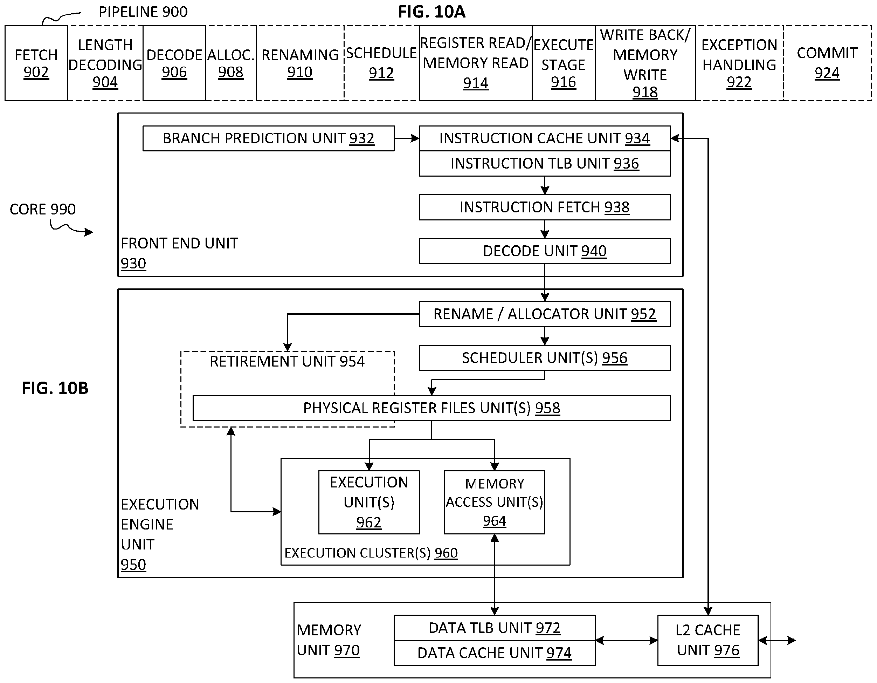

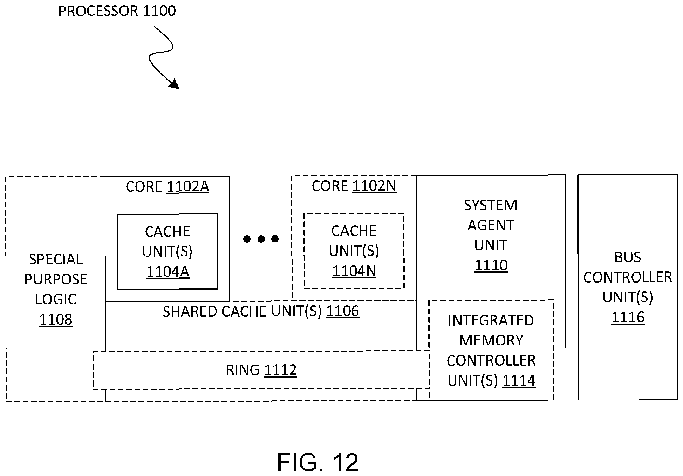

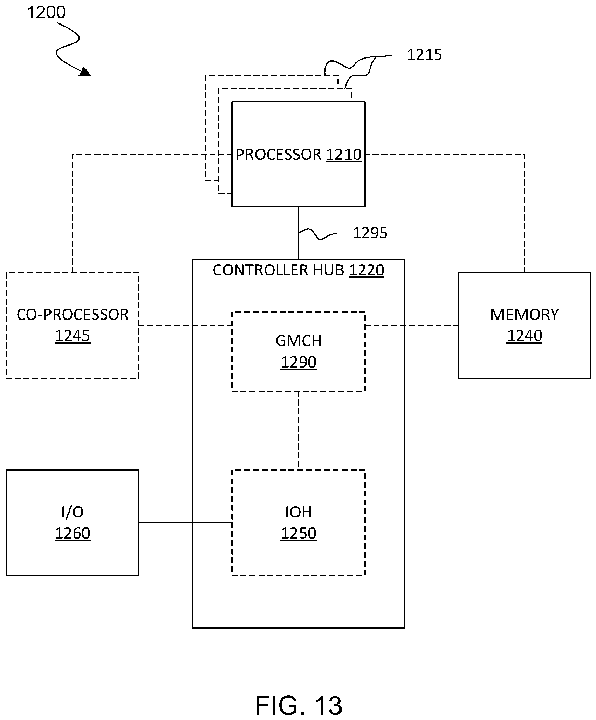

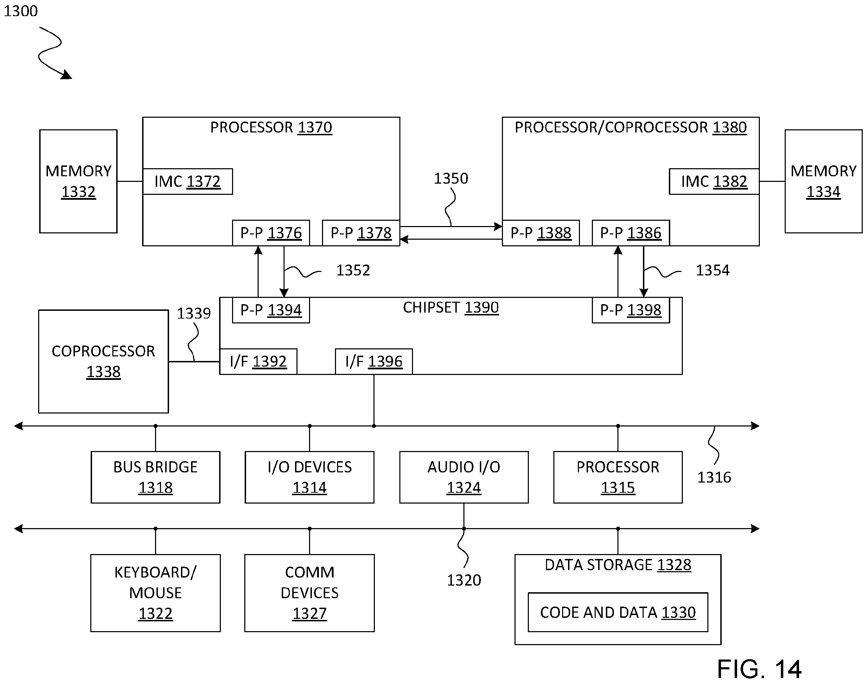

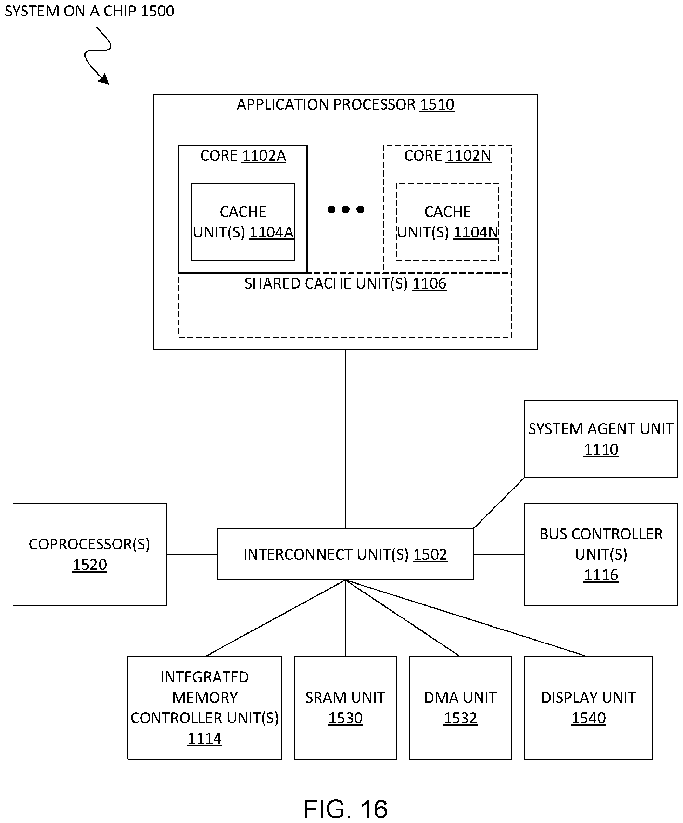

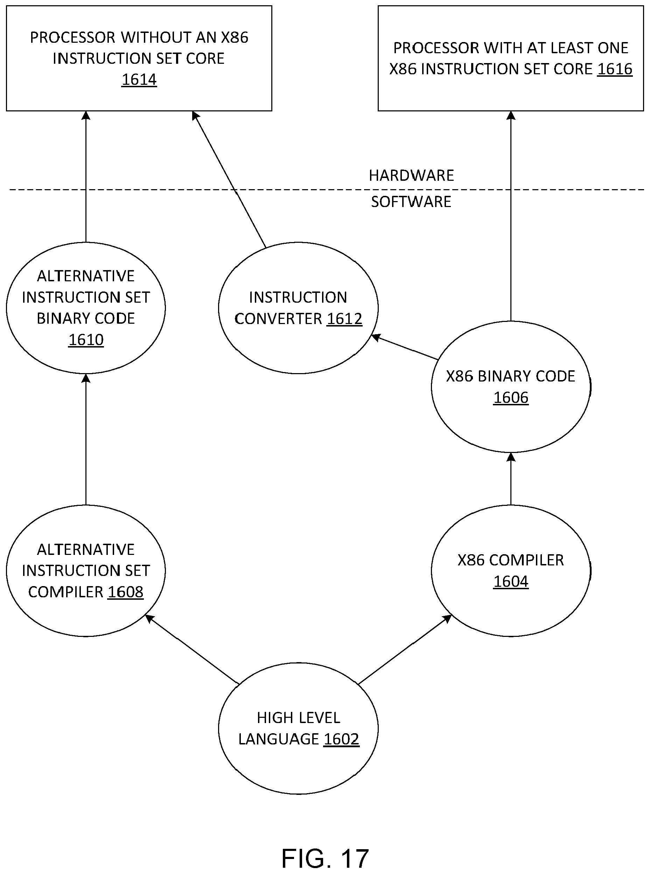

Embodiments of the processor 111 may be incorporated in, for example, the core 990 (FIG. 10B), the cores 1102A-N (FIGs. 12, 16), the processor 1210 (FIG. 13), the co-processor 1245 (FIG. 13), the processor 1370 (FIGs. 14-15), the processor/coprocessor 1380 (FIGs. 14-15), the coprocessor 1338 (FIGs. 14-15), the coprocessor 1520 (FIG. 16), and/or the processors 1614, 1616 (FIG. 17).

With reference to FIGs. 2A to 2C, an embodiment of a method 200 may include managing hidden memory accessible by a processor outside a range of physical memory accessible by user applications at box 221 (e.g., the hidden memory is accessible only by the processor and is not accessible by user applications), and controlling access from the processor to the hidden memory with hidden page tables at box 222. For example, the hidden memory may have a capacity of at least 128 megabytes at box 223. In some embodiments, a page length for the hidden page tables may be longer than a page length for non-hidden memory page tables at box 224, and/or the hidden page tables may include private key information on a per-page basis at box 225. Some embodiments of the method 200 may also include storing virtualization information in the hidden memory at box 226, and/or storing error correction codes for non-hidden memory in the hidden memory at box 227. The method 200 may also include storing an integrity table in the hidden memory at box 228, and determining if contents of non-hidden memory are untampered based on the integrity table stored in the hidden memory at box 229.

With reference to FIG. 3, an embodiment of an integrated circuit 300 may include a substrate 301, first circuitry 303 coupled to a first side of the substrate 301, and second circuitry 305 coupled to a second side of the substrate 301 opposite to the first side of the substrate 301 and communicatively coupled to the first circuitry 303. The second circuitry 305 may be configured to provide hidden memory accessible by the first circuitry 303 outside a range of physical memory accessible by user applications (e.g., the hidden memory is accessible only by the first circuitry 303 and is not accessible by user applications). Some embodiments may further include third circuitry 307 communicatively coupled to the first circuitry 303 and the second circuitry 305. The third circuitry 307 may be configured to control access from the first circuitry 303 to the hidden memory with hidden page tables. For example, a page length for the hidden page tables may be longer than a page length for off-substrate memory page tables, and/or the hidden page tables may include private key information on a per-page basis. In some embodiments, the first circuitry 303 may be further configured to store virtualization information in the hidden memory, and/or to store error correction codes for off-substrate memory in the hidden memory. The first circuitry 303 may also be configured to store an integrity table in the hidden memory, and determine if contents of off-substrate memory are untampered based on the integrity table stored in the hidden memory.

Some embodiments provide technology to add a large amount of hidden memory for software virtualization. In some embodiments, a large amount of hidden memory page tables is provided in a microprocessor and the hidden pages tables are effectively used in a transparent manner to create hidden memory. The hidden memory may be used in virtualizing an instruction set architecture (ISA) or general virtualization. In some embodiments, the created hidden page tables point to memory circuits on the back side of a silicon substrate (e.g., a wafer or an integrated circuit die) to create a large amount of hidden memory. Embodiments of the hidden memory may advantageously address a variety of problems in a computing system including, for example, private storage for metadata.

With reference to FIG. 4, an embodiment of a computing system 400 may include a central processor unit (CPU) chip 401 that includes a CPU 402 coupled to a memory management unit (MMU) 403. The CPU chip 401 may include technology to provide hidden page tables 404 for the CPU 402. The CPU 402 may access physical memory 411 and storage (via a disk controller 421) through the MMU 403. The hidden page tables 404 may provide access for the CPU 402 to hidden memory that is outside of a range of memory of the physical memory 411 accessed through the MMU 403. Advantageously, the hidden page tables 404 may be used to create a virtualized ISA environment.

In some embodiments, the hidden memory may be fabricated on a same integrated circuit die as the CPU chip 401 or assembled in a same integrated circuit package as the CPU chip 401, providing a tightly coupled and physically secure memory dedicated for use by the CPU 402. Off-die memory and/or other external memory may or may not be available on a given moment. Embodiments may provide a significant amount of on-die or in-package storage for metadata that is always available to the CPU 402, advantageously enabling a wide variety of architectural enhancements. For example, error correcting codes (ECC) for DRAM may be stored on chip in the hidden memory, which may reduce the cost of dual-inline memory modules (DIMMs). Some embodiments may keep integrity trees (e.g., Merkle tress) to determine if tampering has occurred. Given the benefit of the present specification and drawings, numerous other examples will occur to those skilled in the art.

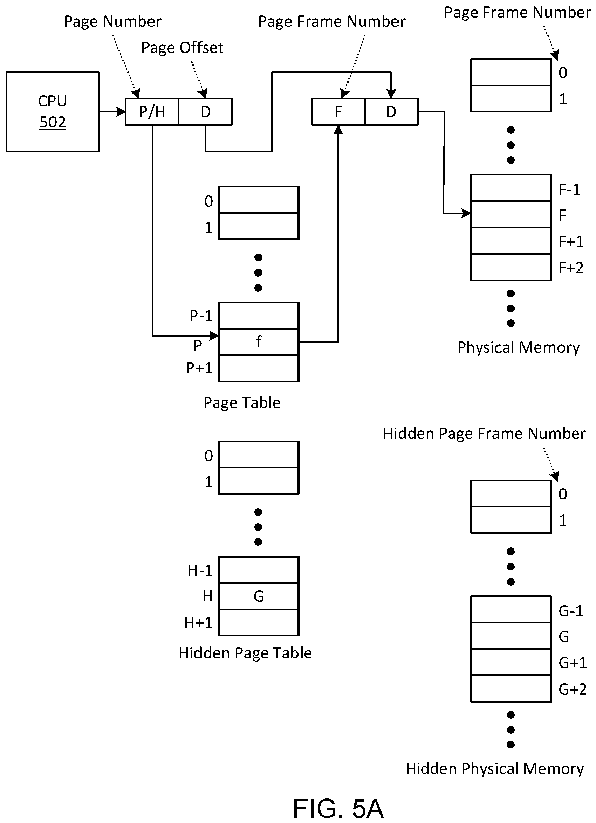

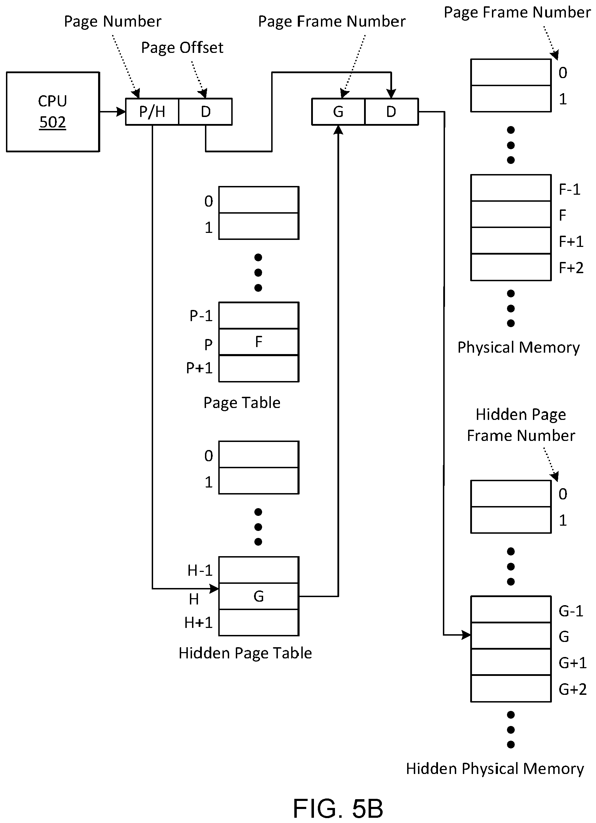

With reference to FIGs. 5A to 5B, an illustrative diagram shows an embodiment of memory indirection with hidden page tables. To access regular physical memory, the CPU 502 issues a memory request with a page number P that points to physical memory and a page offset D. A page table entry at location P provides a page frame number F. The access to the physical memory is then fulfilled based on the page frame number F and the page offset D. To access hidden physical memory, the CPU 502 issues a memory request with a page number H that points to hidden physical memory and a page offset D. A page table entry at location H provides a hidden page frame number G. The access to the hidden physical memory is then fulfilled based on the hidden page frame number G and the page offset D.

The hidden page tables need not be identical to page tables that the normal OS uses. In some embodiments, for example the hidden page tables may be significantly longer as compared to the page tables for regular physical memory. The longer hidden page tables allow for an additional payload of metadata to be included inside each of the table entries. For example, the payload may include values such as ECC or Integrity. Alternate payload values may include per page or per grouping encryption keys for memory encryption algorithms (e.g., such as multi-key total memory encryption (MKTME)).

Embodiments of the memory in the hidden space may be used for a large variety of usages. For example, in one embodiment the hidden memory may contain integrity values for all of memory. The integrity values may be comprised of a cryptographic hash tree such as, for example, a Merkle tree. Embodiments that maintain an integrity value on-die may allow for the processor to determine if a device or application had altered the contents of memory unbeknownst to the OS, advantageously providing a strong security mechanism against DMA style attacks.

In some embodiments, the hidden page tables may contain ECC for all of memory. Conventionally, ECC meta-data is stored in additional memory devices on external memory modules. Embodiments may store ECC information on-die, advantageously allowing detection and correction of any errors in DRAM up-to the limit of ECC bits allocated per line.

In some embodiments, the hidden memory may contain keys for memory for the private use of devices such as, for example, graphics devices. For example, different memory areas may have different keys on a per page basis. Embodiments may advantageously provide a beneficial extension of technologies such as MKTME

Embodiments of the hidden memory and hidden page tables may be implemented with any suitable memory technology including DRAM, SRAM, NVRAM, NVM, NAND, etc. Similarly, although some embodiments described herein relate to utilizing on-die or on-package DRAM for the hidden memory, other embodiments may utilize off-die or off-package memory. In some embodiments, on-die memory or on-package memory may be preferred to provide relatively tighter coupling to the processor and relatively better physical isolation and security for the hidden memory. Any suitable fabrication and/or packaging technology may be utilized to integrate the hidden memory on a same die and/or in a same package with a processor.

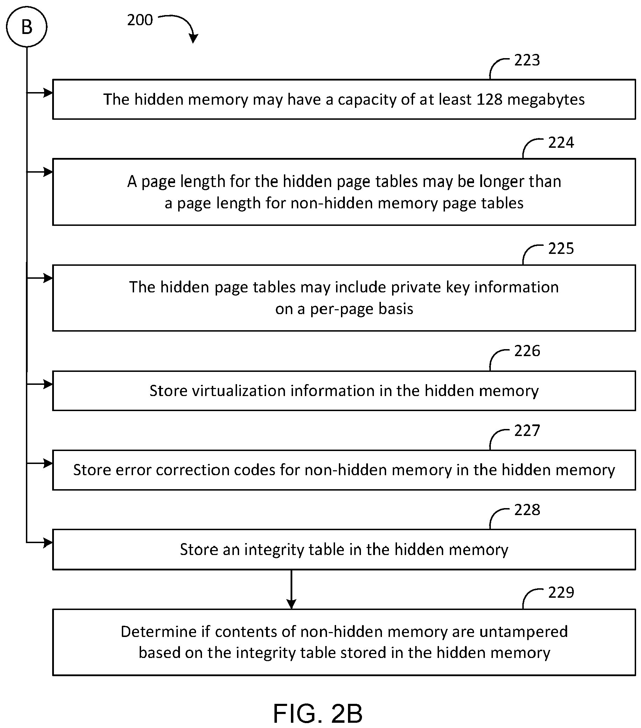

With reference to FIGs. 6A to 6B, an embodiment of an electronic apparatus 650 may include an interposer 651, a processor 652 coupled to the interposer 651, and at least one memory stack device 653 (e.g., a 3D DRAM stack) coupled to the interposer 651 and communicatively coupled to the processor 652 through the interposer 651. The at least one memory stack device 653 may include a stack of dice including at least one logic die 654 and at least two memory dice 655 (e.g., DRAM). An inter-die connection for the memory dice 655 and/or logic die 654 may be made with through-silicon vias (TSVs) 656, for example. In some embodiments, the apparatus 650 may further include a package substrate 657 coupled to the interposer 651. For example, the package substrate 657 may include a SoC package or a printed circuit board such as graphics board, a HPC board, etc. The processor 652 and/or the logic die 654 may be configured to implement one or more features or aspects of the embodiments described herein. For example, the processor 652 and/or the logic die 654 may implement some or all of the method 200 (FIG. 2).

In some embodiments, the processor 652 and/or the logic die 654 may include technology to manage a portion of the DRAM stacks 653 as hidden memory outside a range of physical memory accessible by user applications, and control access to the hidden memory from the processor 652 with hidden page tables. For example, the hidden memory may have a capacity of at least 128 megabytes. In some embodiments of the apparatus 650, a page length for the hidden page tables may be longer than a page length for non-hidden memory page tables. Additionally, or alternatively, the hidden page tables may include private key information on a per-page basis. In some embodiments, the processor 652 and/or the logic die 654 may include further technology to store virtualization information in the hidden memory, to store error correction codes for non-hidden memory in the hidden memory, and/or to store an integrity table in the hidden memory and determine if contents of non-hidden memory are untampered based on the integrity table stored in the hidden memory.

Some embodiments may fabricate a silicon die with many hidden transistors on layers of a back side of the substrate (e.g., relative to a front side of the substrate that includes the processor). The hidden transistors provide a large amount of memory capacity that may be accessed by the hidden page tables. In some embodiments, the hidden page tables point to a section of the main memory that is hidden from normal applications and is managed by the processor. Additionally, the hidden page tables provide the opportunity to introduce a new abstraction layer for memory that includes more bits to control.

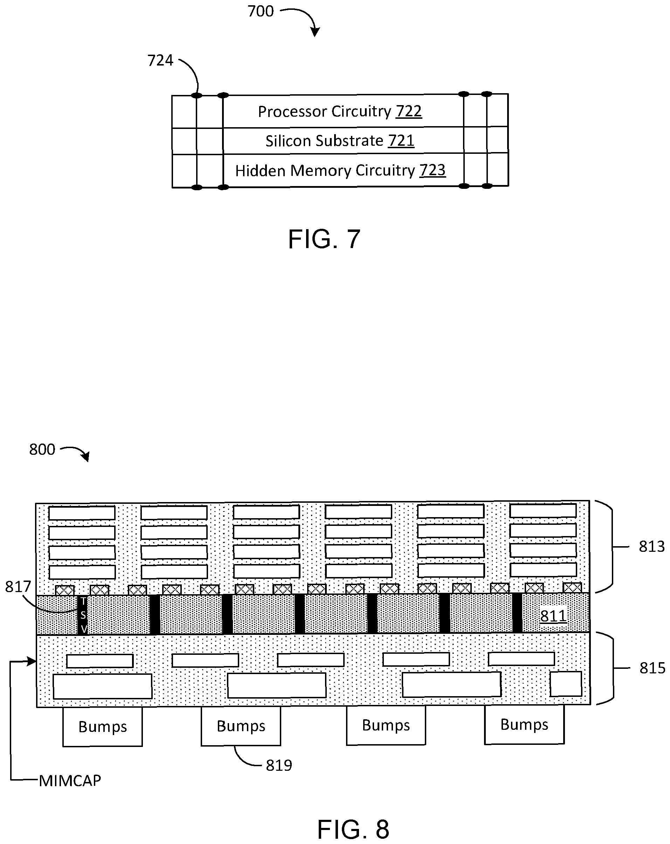

With reference to FIG. 7, an embodiment of an integrated circuit die 700 includes a silicon substrate 721 with processor circuitry 722 fabricated on one side (e.g., nominally a front side) of the silicon substrate 721 and hidden memory circuitry 723 fabricated on the other side (e.g., nominally a back side) of the silicon substrate 721. The processor circuitry 722 may be electrically coupled to the hidden memory circuitry 723 by a plurality of TSVs 724 disposed completely through the silicon substrate 721. The processor circuitry 722 and the hidden memory circuitry 723 may be configured to provide hidden memory accessible only by the processor circuitry 722. The processor circuitry 722 and the hidden memory circuitry 723 may be configured to control access from the processor circuitry 722 to the hidden memory with hidden page tables. For example, a page length for the hidden page tables may be longer than a page length for off-substrate memory page tables, and/or the hidden page tables may include private key information on a per-page basis. In some embodiments, the processor circuitry 722 may be further configured to store virtualization information in the hidden memory, and/or to store error correction codes for off-substrate memory in the hidden memory. The processor circuitry 722 may also be configured to store an integrity table in the hidden memory, and determine if contents of off-substrate memory are untampered based on the integrity table stored in the hidden memory. In some embodiments, the hidden memory circuitry 723 may comprise RAM, such as DRAM Embodiments of the silicon substrate 721, processor circuitry 722, hidden memory circuitry 723, and TSVs 724 may be fabricated utilizing any suitable silicon/memory fabrication techniques.

With reference to FIG. 8, an embodiment of an integrated circuit die 800 includes a silicon substrate 811 with processor circuitry layers 813 on a front side of the silicon substrate 811 and hidden memory circuitry layers 815 on a back side of the silicon substrate 811. The processor circuitry layers 813 may include transistors, signal wires, etc. configured to provide a processor. The hidden memory circuitry layers 815 may include metal-insulator-metal capacitors (MIMCAPs), power wires, signals wires, hidden transistors, etc. to provide hidden memory for the processor. TSVs 817 may electrically couple the hidden memory circuitry layers 815 to the processor circuitry layers 813. Solder bumps 819 may be provided on the back side of the silicon substrate 811, outside of the hidden memory circuitry layers 815.

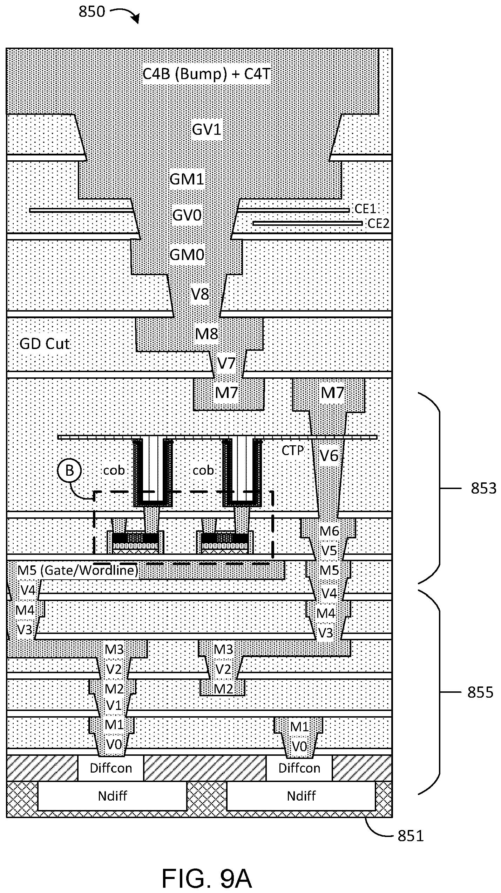

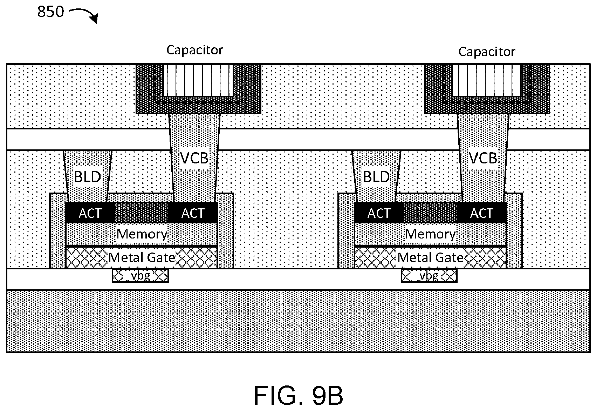

With reference to FIGs. 9A to 9B, an embodiment of a backend embedded DRAM (eDRAM) 850 includes a plurality of layers fabricated on a silicon substrate 851 to provide a memory array 853 and memory peripheral circuits 855. Memory bit cells and peripheral circuits are embedded in the silicon substrate 851 to provide a significant amount of eDRAM (e.g., 32, 64, or 128 megabytes or more). The eDRAM 850 may be fabricated with backend channel material in the backend of the fabrication line, in between the metal layers. As shown in more detail in FIG. 9B, the memory bit cell may include one transistor and one capacitor (1T1C), which implements a DRAM transistor and capacitor in series. The CMOS peripheral circuits that control the bit cells reside below the array, advantageously providing tight density, tight coupling, low latency, and high random access bandwidth. The bottom layers include the substrate 851, which includes diffusion contact (diffcon) material. The die for the eDRAM 850 may alternate layers of interconnect (M) layers and interlayer (V) layers. In the illustrated example, the transistors for the bit cell array are located between the M5 and M6 layers. The capacitors for the 1T1C DRAM cells are located in the V6 layer. The memory array 853 resides on top of the memory peripherals 855, and more metal processing may reside above the memory array 853.

Some embodiments may provide multiple tiers of the memory array 853. For example, some tiers may be provided for faster access, while other tiers may be provided to be more secure (e.g., for usages that involve a lot of hashing). The eDRAM 850 may be fabricated on a back side of the substrate 851 and coupled to circuitry (e.g., a processor) on the front side of the substrate 851 with TSVs. In some embodiments, the memory array 853 may be mirrored on both sides of the silicon substrate 851. Because the physical array may be fabricated separately from silicon substrate 851, embodiments of the eDRAM 850 may be built on either or both the front side and back side of the silicon substrate 851. Alternatively, the back side of the silicon substrate 851 may be pinned down such that there is minimal substrate material remaining (e.g., less than a few tens of nanometers), and the eDRAM 850 may be bonded to another integrated circuit die that includes the processor.

Those skilled in the art will appreciate that a wide variety of devices may benefit from the foregoing embodiments. The following exemplary core architectures, processors, and computer architectures are non-limiting examples of devices that may beneficially incorporate embodiments of the technology described herein.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

FIG. 10A is a block diagram illustrating both an exemplary in-order pipeline and an exemplary register renaming, out-of-order issue/execution pipeline according to embodiments of the invention. FIG. 10B is a block diagram illustrating both an exemplary embodiment of an in-order architecture core and an exemplary register renaming, out-of-order issue/execution architecture core to be included in a processor according to embodiments of the invention. The solid lined boxes in FIGs. 10A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 10A, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

FIG. 10B shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964. The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 perform the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

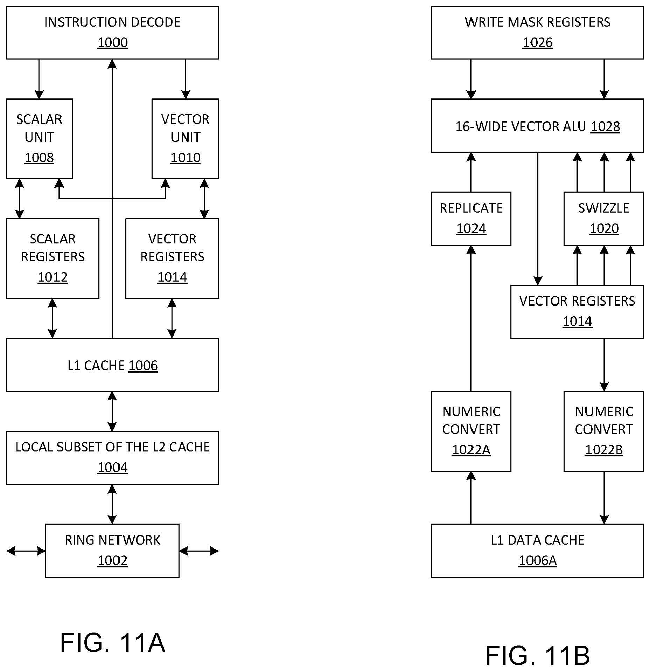

FIGs. 11A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 11A is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from a level 1 (L1) cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

FIG. 11B is an expanded view of part of the processor core in FIG. 11A according to embodiments of the invention. FIG. 11B includes an L1 data cache 1006A part of the L1 cache 1006, as well as more detail regarding the vector unit 1010 and the vector registers 1014. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

FIG. 12 is a block diagram of a processor 1100 that may have more than one core, may have an integrated memory controller, and may have integrated graphics according to embodiments of the invention. The solid lined boxes in FIG. 12 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) 1114 in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of respective caches 1104A-N within the cores 1102A-N, a set or one or more shared cache units 1106, and external memory (not shown) coupled to the set of integrated memory controller units 1114. The set of shared cache units 1106 may include one or more mid-level caches, such as level 2 (L2), level 3 (L3), level 4 (L4), or other levels of cache, a last level cache (LLC), and/or combinations thereof. While in one embodiment a ring based interconnect unit 1112 interconnects the integrated graphics logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102-A-N.

In some embodiments, one or more of the cores 1102A-N are capable of multithreading. The system agent 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set.

### Exemplary Computer Architectures

FIGs. 13-16 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 13, shown is a block diagram of a system 1200 in accordance with one embodiment of the present invention. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in FIG. 13 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

Referring now to FIG. 14, shown is a block diagram of a first more specific exemplary system 1300 in accordance with an embodiment of the present invention. As shown in FIG. 14, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a point-to-point (P-P) interface 1350 using P-P interface circuits 1378, 1388. As shown in FIG. 14, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a highperformance interface 1339 and an interface 1392. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in FIG. 14, various I/O devices 1314 may be coupled to first bus 1316, along with a bus bridge 1318 which couples first bus 1316 to a second bus 1320. In one embodiment, one or more additional processor(s) 1315, such as coprocessors, high-throughput MIC processors, GPGPU's, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of FIG. 14, a system may implement a multi-drop bus or other such architecture.

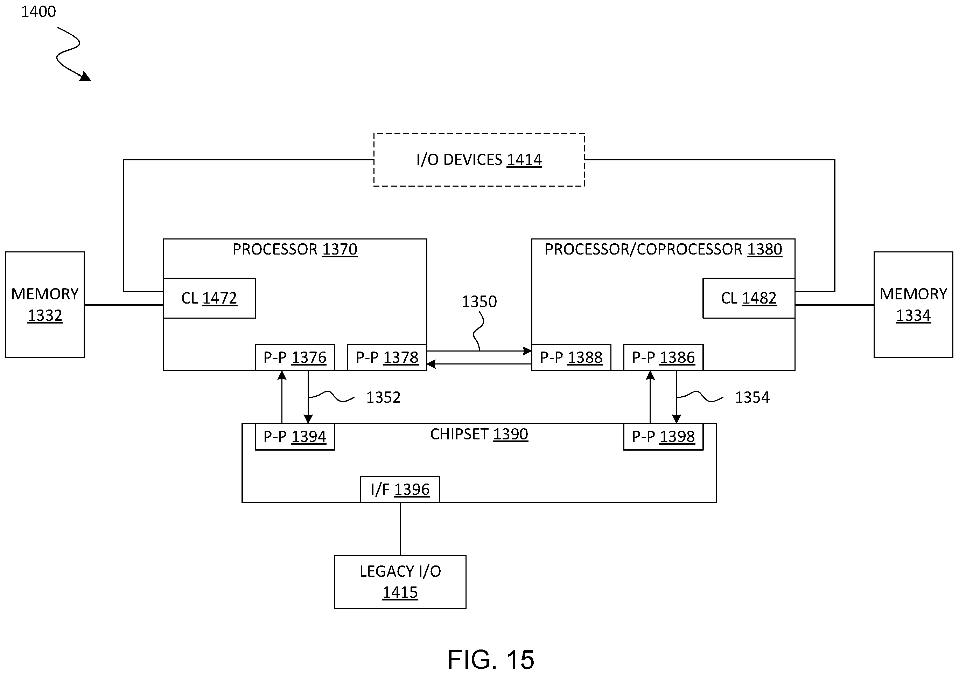

Referring now to FIG. 15, shown is a block diagram of a second more specific exemplary system 1400 in accordance with an embodiment of the present invention. Like elements in FIGs. 14 and 15 bear like reference numerals, and certain aspects of FIG. 14 have been omitted from FIG. 15 in order to avoid obscuring other aspects of FIG. 15.

FIG. 15 illustrates that the processors 1370, 1380 may include integrated memory and I/O control logic ("CL") 1472 and 1482, respectively. Thus, the CL 1472, 1482 include integrated memory controller units and include I/O control logic. FIG. 15 illustrates that not only are the memories 1332, 1334 coupled to the CL 1472, 1482, but also that I/O devices 1414 are also coupled to the control logic 1472, 1482. Legacy I/O devices 1415 are coupled to the chipset 1390.

Referring now to FIG. 16, shown is a block diagram of a SoC 1500 in accordance with an embodiment of the present invention. Similar elements in FIG. 12 bear like reference numerals. Also, dashed lined boxes are optional features on more advanced SoCs. In FIG. 16, an interconnect unit(s) 1502 is coupled to: an application processor 1510 which includes a set of one or more cores 1102A-N and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1330 illustrated in FIG. 14, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 17 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 17 shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, FIG. 17 shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

Techniques and architectures for instruction set architecture opcode parameterization are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

### Additional Notes and Examples

Example 1 includes an apparatus, comprising a processor, memory communicatively coupled to the processor, and circuitry communicatively coupled to the processor and the memory, the circuitry to manage a portion of the memory as hidden memory outside a range of physical memory accessible by user applications, and control access to the hidden memory from the processor with hidden page tables.

Example 2 includes the apparatus of Example 1, wherein the hidden memory has a capacity of at least 128 megabytes.

Example 3 includes the apparatus of Example 2, wherein the processor, the hidden memory, and the circuitry are disposed on a same integrated circuit die.

Example 4 includes the apparatus of Example 3, wherein the processor is disposed on a first surface of the die and the hidden memory is disposed on a second surface of the die opposite to the first surface.

Example 5 includes the apparatus of any of Examples 2 to 4, wherein the processor, the memory, and the circuitry are disposed in a same integrated circuit package.

Example 6 includes the apparatus of Example 5, wherein the memory comprises three-dimensional stacked dynamic random access memory.

Example 7 includes the apparatus of any of Examples 2 to 6, wherein a page length for the hidden page tables is longer than a page length for non-hidden memory page tables.

Example 8 includes the apparatus of any of Examples 2 to 7, wherein the hidden page tables include private key information on a per-page basis.

Example 9 includes the apparatus of any of Examples 2 to 8, wherein the circuitry is further to store virtualization information in the hidden memory.

Example 10 includes the apparatus of any of Examples 2 to 9, wherein the circuitry is further to store error correction codes for non-hidden memory in the hidden memory.

Example 11 includes the apparatus of any of Examples 2 to 10, wherein the circuitry is further to store an integrity table in the hidden memory, and determine if contents of non-hidden memory are untampered based on the integrity table stored in the hidden memory.

Example 12 includes a method, comprising managing hidden memory accessible by a processor outside a range of physical memory accessible by user applications, and controlling access from the processor to the hidden memory with hidden page tables.

Example 13 includes the method of Example 12, wherein the hidden memory has a capacity of at least 128 megabytes.

Example 14 includes the method of any of Examples 12 to 13, wherein a page length for the hidden page tables is longer than a page length for non-hidden memory page tables.

Example 15 includes the method of any of Examples 12 to 14, wherein the hidden page tables include private key information on a per-page basis.

Example 16 includes the method of any of Examples 12 to 15, further comprising storing virtualization information in the hidden memory.

Example 17 includes the method of any of Examples 12 to 16, further comprising storing error correction codes for non-hidden memory in the hidden memory.

Example 18 includes the method of any of Examples 12 to 17, further comprising storing an integrity table in the hidden memory, and determining if contents of non-hidden memory are untampered based on the integrity table stored in the hidden memory.

Example 19 includes an integrated circuit, comprising a substrate, first circuitry coupled to a first side of the substrate, and second circuitry coupled to a second side of the substrate opposite to the first side of the substrate and communicatively coupled to the first circuitry, the second circuitry to provide hidden memory accessible by the first circuitry outside a range of physical memory accessible by user applications.

Example 20 includes the integrated circuit of Example 19, further comprising third circuitry communicatively coupled to the first circuitry and the second circuitry, the third circuitry to control access from the first circuitry to the hidden memory with hidden page tables.

Example 21 includes the integrated circuit of Example 20, wherein a page length for the hidden page tables is longer than a page length for off-substrate memory page tables.

Example 22 includes the integrated circuit of any of Examples 19 to 21, wherein the hidden page tables include private key information on a per-page basis.

Example 23 includes the integrated circuit of any of Examples 19 to 22, wherein the first circuitry is further to store virtualization information in the hidden memory.

Example 24 includes the integrated circuit of any of Examples 19 to 23, wherein the first circuitry is further to store error correction codes for off-substrate memory in the hidden memory.

Example 25 includes the integrated circuit of any of Examples 19 to 24, wherein the first circuitry is further to store an integrity table in the hidden memory, and determine if contents of off-substrate memory are untampered based on the integrity table stored in the hidden memory.

Example 26 includes an apparatus, comprising means for managing hidden memory accessible by a processor outside a range of physical memory accessible by user applications, and means for controlling access from the processor to the hidden memory with hidden page tables.

Example 27 includes the apparatus of Example 26, wherein the hidden memory has a capacity of at least 128 megabytes.

Example 28 includes the apparatus of any of Examples 26 to 27, wherein a page length for the hidden page tables is longer than a page length for non-hidden memory page tables.

Example 29 includes the apparatus of any of Examples 26 to 28, wherein the hidden page tables include private key information on a per-page basis.

Example 30 includes the apparatus of any of Examples 26 to 29, further comprising means for storing virtualization information in the hidden memory.

Example 31 includes the apparatus of any of Examples 26 to 30, further comprising means for storing error correction codes for non-hidden memory in the hidden memory.

Example 32 includes the apparatus of any of Examples 26 to 31, further comprising means for storing an integrity table in the hidden memory, and means for determining if contents of non-hidden memory are untampered based on the integrity table stored in the hidden memory.

Example 33 includes at least one non-transitory machine readable medium comprising a plurality of instructions that, in response to being executed on a computing device, cause the computing device to manage hidden memory accessible by a processor outside a range of physical memory accessible by user applications, and control access from the processor to the hidden memory with hidden page tables.

Example 34 includes the at least one non-transitory machine readable medium of Example 33, wherein the hidden memory has a capacity of at least 128 megabytes.

Example 35 includes the at least one non-transitory machine readable medium of any of Examples 33 to 34, wherein a page length for the hidden page tables is longer than a page length for non-hidden memory page tables.

Example 36 includes the at least one non-transitory machine readable medium of any of Examples 33 to 35, wherein the hidden page tables include private key information on a per-page basis.

Example 37 includes the at least one non-transitory machine readable medium of any of Examples 33 to 36, comprising a plurality of further instructions that, in response to being executed on the computing device, cause the computing device to store virtualization information in the hidden memory.

Example 38 includes the at least one non-transitory machine readable medium of any of Examples 33 to 37, comprising a plurality of further instructions that, in response to being executed on the computing device, cause the computing device to store error correction codes for non-hidden memory in the hidden memory.

Example 39 includes the at least one non-transitory machine readable medium of any of Examples 33 to 38, comprising a plurality of further instructions that, in response to being executed on the computing device, cause the computing device to store an integrity table in the hidden memory, and determine if contents of non-hidden memory are untampered based on the integrity table stored in the hidden memory.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. An apparatus, comprising:
a processor;
memory communicatively coupled to the processor; and
circuitry communicatively coupled to the processor and the memory, the circuitry to:
manage a portion of the memory as hidden memory outside a range of physical memory accessible by user applications, and
control access to the hidden memory from the processor with hidden page tables.

2. The apparatus of claim 1, wherein the hidden memory has a capacity of at least 128 megabytes.

3. The apparatus of claim 2, wherein the processor, the hidden memory, and the circuitry are disposed on a same integrated circuit die.

4. The apparatus of claim 3, wherein the processor is disposed on a first surface of the die and the hidden memory is disposed on a second surface of the die opposite to the first surface.

5. The apparatus of any of claims 2 to 4, wherein the processor, the memory, and the circuitry are disposed in a same integrated circuit package.

6. A method, comprising:
managing hidden memory accessible by a processor outside a range of physical memory accessible by user applications; and
controlling access from the processor to the hidden memory with hidden page tables.

7. The method of claim 6, wherein the hidden memory has a capacity of at least 128 megabytes.

8. The method of any of claims 6 to 7, further comprising:
storing virtualization information in the hidden memory.

9. The method of any of claims 6 to 8, further comprising:
storing error correction codes for non-hidden memory in the hidden memory.

10. The method of any of claims 6 to 9, further comprising:
storing an integrity table in the hidden memory; and
determining if contents of non-hidden memory are untampered based on the integrity table stored in the hidden memory.

11. At least one non-transitory machine readable medium comprising a plurality of instructions that, in response to being executed on a computing device, cause the computing device to:
manage hidden memory accessible by a processor outside a range of physical memory accessible by user applications; and
control access from the processor to the hidden memory with hidden page tables.

12. The at least one non-transitory machine readable medium of claim 11, wherein a page length for the hidden page tables is longer than a page length for non-hidden memory page tables.

13. The at least one non-transitory machine readable medium of any of claims 11 to 12, wherein the hidden page tables include private key information on a per-page basis.

14. The at least one non-transitory machine readable medium of any of claims 11 to 13, comprising a plurality of further instructions that, in response to being executed on the computing device, cause the computing device to:
store error correction codes for non-hidden memory in the hidden memory.

15. The at least one non-transitory machine readable medium of any of claims 11 to 14, comprising a plurality of further instructions that, in response to being executed on the computing device, cause the computing device to:
store an integrity table in the hidden memory; and
determine if contents of non-hidden memory are untampered based on the integrity table stored in the hidden memory.
